(19) Europäisches Patentamt
European Patent Office
Office européen des brevets

(11) **EP 1 112 630 B1**

(12) **FASCICULE DE BREVET EUROPEEN**

(45) Date de publication et mention
de la délivrance du brevet:
**25.04.2012 Bulletin 2012/17**

(21) Numéro de dépôt: **00949652.2**

(22) Date de dépôt: **06.07.2000**

(51) Int Cl.:
***H04B 17/00*** (2006.01)    ***H04B 7/005*** (2006.01)

(86) Numéro de dépôt international:
**PCT/FR2000/001943**

(87) Numéro de publication internationale:
**WO 2001/005073 (18.01.2001 Gazette 2001/03)**

(54) **PROCEDE D'ESTIMATION DU RAPPORT SIGNAL A BRUIT DANS UN RECEPTEUR DE TELECOMMUNICATIONS ET APPLICATION DE CE PROCEDE AU CONTROLE D'UN EMETTEUR**

VERFAHREN ZUR SCHÄTZUNG DES SIGNAL-RAUSCH-VERHÄLTNISSES IN EINEM TELECOMMUNIKATIONSEMFÄNGER SOWIE ANWENDUNG DIESES VERFAHRENS ZUR STEUERUNG EINES SENDERS

METHOD FOR ESTIMATING SIGNAL-TO- NOISE RATIO IN A TELECOMMUNICATION RECEIVER AND APPLICATION OF SAID METHOD FOR CONTROLLING A TRANSMITTER

(84) Etats contractants désignés:
**AT BE CH CY DE DK ES FI FR GB GR IE IT LI LU MC NL PT SE**

(30) Priorité: **08.07.1999 FR 9908842**

(43) Date de publication de la demande:
**04.07.2001 Bulletin 2001/27**

(73) Titulaire: **Alcatel Lucent**
**75007 Paris (FR)**

(72) Inventeurs:
• **LAPAILLE, Cédric**
**F-78400 Chatou (FR)**

• **CALOT, Guillaume**
**78150 Le Chesnay (FR)**

(74) Mandataire: **Sciaux, Edmond et al**
**Alcatel-Lucent International**
**32, avenue Kléber**
**92700 Colombes (FR)**

(56) Documents cités:
**EP-A- 0 589 595    US-A- 5 559 790**
**US-A- 5 809 065    US-A- 5 918 184**

**Description**

L'invention est relative à un procédé d'estimation du rapport signal à bruit d'un signal reçu par un récepteur de radiocommunications. Elle concerne aussi un récepteur permettant de mettre en oeuvre ce procédé ainsi que l'application du procédé pour contrôler la puissance d'un émetteur.

Un système de télécommunications permet, en général, la transmission simultanée d'un grand nombre de communications différentes.

On considérera, ici, à titre d'exemple, un système de télécommunications dans lequel une pluralité de terminaux communiquent avec une station de commande ou connexion, notamment par l'intermédiaire de moyens de réémission à bord d'un satellite. Les communications entre terminaux s'effectuent par l'intermédiaire de la station de commande. Ainsi, cette dernière communique simultanément avec un ensemble de terminaux.

Dans ce système de télécommunications, le nombre de communications qu'il est possible de transmettre simultanément dépend de la puissance de réémission disponible à bord du satellite. Cette puissance étant nécessairement limitée, pour maximiser la capacité du système, c'est-à-dire pour maximiser le nombre de communications qu'il est possible de transmettre simultanément, il faut minimiser la puissance attribuée à chaque émetteur. Mais cette contrainte est difficilement compatible avec l'exigence d'optimisation de la qualité de la communication qui nécessite une puissance d'émission suffisante. En général, les communications étant de type numérique, la qualité de transmission se mesure par un taux d'erreurs maximum admissible. Ce taux d'erreurs admissible est garanti si le rapport signal à bruit reçu dépasse un seuil prédéterminé.

Ainsi, la puissance d'un émetteur est en général déterminée à partir du rapport signal à bruit mesuré au récepteur associé, et cette mesure du rapport signal à bruit est en général effectuée en permanence, notamment dans un système de transmission par satellite, car les conditions de propagation peuvent varier, en particulier du fait des variations des conditions météorologiques. Par exemple, la pluie provoque une forte atténuation du signal reçu par rapport à une transmission par temps clair. Les conditions de propagation peuvent aussi se dégrader du fait de scintillations qui ont pour origine des trajets multiples de signaux provoquant des combinaisons additives et soustractives ; ces conditions peuvent aussi se dégrader du fait de masquages intervenant quand une antenne suit une source mobile (ici, le satellite) et que des obstacles s'interposent sur le trajet du signal transmis.

Une mesure de rapport signal à bruit d'un signal reçu étant en général elle-même entachée d'un bruit d'estimation, afin de réduire ce bruit d'estimation, on effectue, habituellement, un lissage tel qu'un filtrage passe-bas après cette mesure.

La précision de la mesure du rapport signal à bruit détermine la capacité du système de télécommunications. En effet, si la mesure est précise, on affectera à chaque émetteur la puissance qui lui est juste nécessaire, ce qui permet donc de maximiser les ressources en communications, alors qu'une mesure de faible précision entraîne une puissance excessive attribuée à chaque émetteur, ce qui n'est pas favorable à la maximisation de la capacité en communication.

L'invention permet d'augmenter la précision de l'estimation du rapport signal à bruit et permet donc de fournir un signal de consigne à l'émetteur associé qui minimise la puissance d'émission de ce dernier.

À cet effet, l'invention prévoit qu'on estime séparément le signal et le bruit et qu'avant d'effectuer la division entre le signal et le bruit, on filtre séparément le signal et le bruit. On a en effet constaté qu'un filtrage, préalable à la division, sur chacune des composantes permettait de réduire le bruit d'estimation.

En outre, dans un mode de réalisation, les filtrages effectués sur le signal et le bruit sont de types différents et, de préférence, adaptés respectivement au signal et au bruit. En effet, le signal et le bruit constituant des variables de natures différentes, en particulier du fait de leurs origines physiques différentes, un traitement adapté à l'une des variables n'est pas forcément adapté à l'autre, par exemple, parce que leurs amplitudes et leurs bandes de fréquence sont le plus souvent très fortement différentes.

En outre, quand le trafic est sporadique, l'estimation de la puissance du signal peut n'être effectuée que lors de l'apparition de signaux d'information alors que le bruit peut être mesuré en permanence.

Pour filtrer le signal utile avant d'effectuer la division, on choisit, de préférence, un filtre passe-bas permettant, d'une part, une réduction sensible du bruit d'estimation de ce signal et, d'autre part, un temps de réaction de boucle de régulation suffisamment faible. À cet effet, on peut faire appel soit à un filtre à réponse impulsionnelle finie par exemple de type moyenneur, soit à un filtre de réponse impulsionnelle infinie par exemple du premier ordre. Un tel filtre à réponse impulsionnelle infinie du premier ordre sera préféré dans le cas d'un trafic sporadique car ce filtre confère plus de poids aux informations plus récentes qu'aux informations plus anciennes.

Pour le filtrage, ou lissage, de l'estimation du bruit, on utilise, de préférence, un lissage de type statistique qui tient compte de la nature aléatoire du bruit. À cet effet, on observe la distribution statistique des mesures de puissances de bruits sur une période déterminée choisie à une valeur suffisamment importante pour collecter un nombre élevé (statistiquement représentatif) de mesures, cette période d'observation étant cependant choisie pour que le bruit conserve, pendant cette période, un comportement stationnaire. On choisit alors un niveau de bruit supérieur à la valeur moyenne et tel qu'il constitue une valeur limite au-delà de laquelle la probabilité pour que la puissance de bruit estimée dépasse cette limite, au cours de la période d'observation, soit inférieure à un seuil ε faible.

Autrement dit, pour l'estimation du bruit, on n'effectue pas un calcul de valeur moyenne mais on considère un histogramme des niveaux de bruit et on détermine la dispersion de ces niveaux.

Dans le cas le plus simple, on choisit le niveau de bruit le plus élevé sur une période d'observation suffisamment longue, par exemple, de l'ordre de la seconde.

On peut aussi effectuer cette estimation du niveau de bruit en fonction de paramètres connus de ce bruit. Par exemple, si on sait que le bruit est gaussien, on calcule la moyenne $\mu$ et la variance $\sigma^2$ de la distribution et la valeur lissée est : $\mu + n\sigma$, $\sigma$ étant un écart type et $n$ étant un entier tel que la probabilité pour que la puissance de bruit ne dépasse pas cette valeur $\mu + n\sigma$, soit inférieure au seuil faible ε.

De façon plus générale, la moyenne et la variance, c'est-à-dire les moments de la distribution, permettent d'estimer la puissance de bruit.

Le lissage de type statistique de l'estimation est particulièrement utile en cas de brouillage.

Il est aussi possible de faire appel à un filtrage du bruit de type passe-bas, à réponse impulsionnelle finie ou infinie, par exemple quand on a affaire à un bruit thermique.

La présente invention s'applique principalement à l'estimation du rapport signal à bruit d'un signal utile, c'est-à-dire un signal de données proprement dit.

La présente invention prévoit un procédé d'estimation du rapport signal à bruit d'un signal utile, notamment de type numérique, reçu par un récepteur de radiocommunications. Ce procédé est caractérisé en ce qu'on estime séparément le signal et le bruit et en ce que, pour minimiser le bruit d'estimation du rapport signal à bruit, on filtre séparément le signal et le bruit avant d'effectuer la division du signal par le bruit.

Selon un mode de réalisation, le filtrage du signal utile est différent du filtrage du signal de bruit.

Selon un mode de réalisation, pour filtrer le signal de bruit, on observe la distribution statistique des mesures de puissance de bruit pour une période déterminée au cours de laquelle on collecte un nombre statistiquement représentatif d'échantillons de mesures, cette période étant cependant suffisamment courte pour que le bruit reste pratiquement stationnaire.

Selon une autre réalisation, le niveau de bruit retenu a une valeur telle que la probabilité que le niveau de bruit dépasse cette valeur soit inférieure à un seuil prédéterminé pendant la période d'observation.

Selon un mode de réalisation, la valeur de bruit retenue est la valeur maximale sur la période déterminée.

Selon un mode de réalisation, on détermine les moments de la distribution.

Selon un mode de réalisation, on détermine la moyenne et la variance de la distribution et la valeur de bruit retenue est $\mu + n\sigma$, $\sigma$ étant un écart type et $n$ un nombre déterminé en fonction du seuil prédéterminé.

Selon un mode de réalisation, pour filtrer le signal du bruit, on fait appel à un filtrage passe-bas du type à réponse impulsionnelle finie ou infinie.

Selon une réalisation, pour filtrer le signal utile, on fait appel à un filtre à réponse impulsionnelle finie.

Selon un mode de réalisation, le filtre à réponse impulsionnelle finie est de type moyenneur.

Selon un mode de réalisation, l'émetteur délivrant un signal de référence à période régulière avec un niveau déterminé, l'estimation du rapport signal à bruit est effectuée sur ce signal de référence.

Selon un mode de réalisation, pour filtrer l'estimation du signal utile, on utilise un filtre à réponse impulsionnelle infinie.

Selon un mode de réalisation, on utilise un filtrage auto-régressif du premier ordre, par exemple, d'expression :

$$\hat{x}_i = (1-a)\tilde{x}_i + a\hat{x}_{i-1}$$

où $\tilde{x}_i$ représente l'estimation instantanée du signal utile à l'instant i, $\hat{x}_i$ représente l'estimation lissée du signal utile à l'instant i et a est un coefficient d'intégration.

Selon un mode de réalisation, le filtrage est appliqué à chaque paquet ou cellule reçu(e), les paquets ou cellules étant reçus de façon sporadique.

La présente invention prévoit en outre une application du procédé selon l'invention à l'estimation du rapport signal à bruit dans un récepteur de télécommunications envoyant une information destinée à contrôler la puissance de l'émetteur correspondant.

D'autres caractéristiques et avantages de l'invention apparaîtront avec la description de certains de ses modes de réalisation, celle-ci étant effectuée en se référant aux dessins ci-annexés sur lesquels :

la figure 1 est un schéma d'un émetteur et d'un récepteur mettant en oeuvre le procédé conforme à l'invention,
la figure 2 est un schéma d'un système de télécommunications auquel s'applique le procédé conforme à l'invention, et
la figure 3 est un diagramme destiné à expliquer certains aspects du filtrage utilisé dans le récepteur de la figure 1.

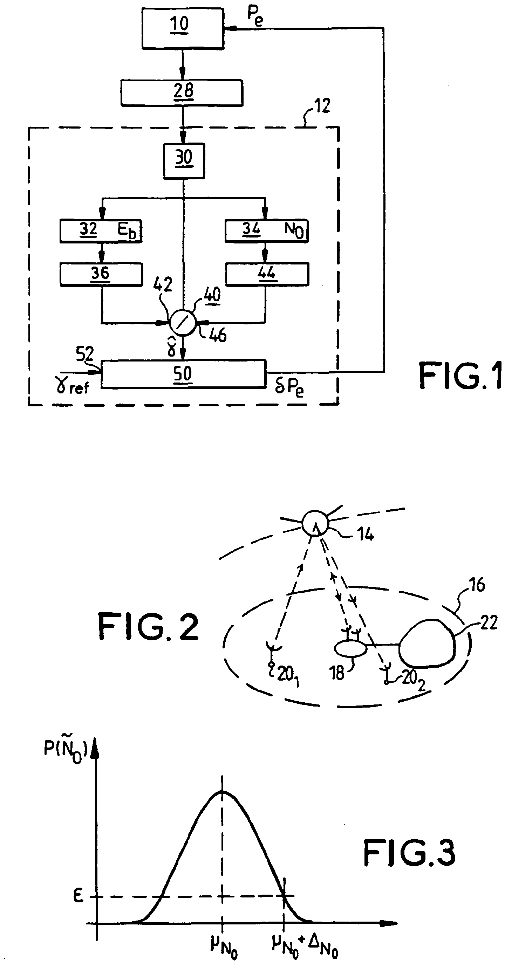

On a représenté sur la figure 1 un émetteur 10 et un récepteur 12 dans lesquels la puissance $P_e$ de l'émetteur 10 est déterminée à l'aide d'un signal de consigne $\delta P_e$ fourni par le récepteur 12.

Dans l'exemple, l'émetteur et le récepteur font partie d'un système de télécommunications dans lequel les communications sont transmises par l'intermédiaire de satellites défilants 14 (figure 2) à orbites basses ou moyennes, de l'ordre de 1450 km dans l'exemple, et dans lequel la terre est divisée en zones 16 ayant, par exemple, chacune 700 km de diamètre et, à l'intérieur de chaque zone 16, on prévoit une station de commande ou connexion 18, par exemple de position centrale, et une pluralité de terminaux $20_1$, $20_2$, etc. La station de connexion 18 est, de son côté, reliée à un ou plusieurs autre(s) réseau(x) 22, par exemple, de type terrestre.

Une communication entre deux terminaux $20_1$ et $20_2$ s'effectue par l'intermédiaire du satellite 14 et de la station 18. De façon plus précise, quand le terminal $20_1$ communique avec le terminal $20_2$, le signal émis par le terminal $20_1$ est transmis à la station 18 par l'intermédiaire du satellite 14 et cette station 18 renvoie le signal au terminal $20_2$, également par l'intermédiaire du satellite 14. Par "satellite", on entend, bien entendu, les moyens de réémission à bord du satellite.

De même, une communication entre un terminal $20_1$ et un abonné du réseau 22 s'effectue par l'intermédiaire de la station 18. En d'autres termes, quand un abonné du réseau 22 appelle l'abonné $20_1$, le signal est transmis à la station 18 et la station 18 transmet ce signal au terminal 20 par l'intermédiaire du satellite 14.

Chaque terminal a un rôle à la fois d'émetteur et de récepteur et la station de connexion 18 est également à la fois émettrice et réceptrice. Ainsi, dans le cas de la figure 1, l'émetteur 10 est disposé soit dans un terminal soit dans la station de connexion 18 et, de même, le récepteur 12 se trouve soit dans la station 18 soit dans un terminal $20_i$.

Un signal transmis par l'émetteur 10 se propage dans l'espace qui constitue un canal 28 (figure 1). Ce canal affaiblit le signal et introduit du bruit.

Le récepteur 12 comporte, de façon classique, un organe de réception 30 et un organe 32 d'estimation de la puissance $E_b$ du signal et un organe 34 d'estimation de la puissance $N_0$ du bruit.

Conformément à l'invention, l'organe 32 d'estimation du signal est suivi par un organe 36 de filtrage de ce signal, ce filtrage 36 étant disposé en amont d'un diviseur 40. Autrement dit, la sortie de l'organe 36 est reliée à l'entrée 42 de numérateur du diviseur 40.

En outre, l'organe 34 d'estimation de la puissance de bruit $N_0$ est suivi, en amont du diviseur 40, par un filtre 44 dont la sortie est reliée à l'entrée 46 de dénominateur du diviseur 40.

Le diviseur 40 fournit une estimation du rapport signal à bruit qui est appliquée à un organe de décision 50 présentant une entrée 52 sur laquelle est appliquée un signal de référence $\gamma_{ref}$ et la comparaison entre le signal fourni par le diviseur 40 et le signal de référence appliqué sur l'entrée 52 permet d'élaborer la consigne $\delta P_e$ pour régler la puissance de l'émetteur 10.

En variante (non montrée), l'organe de décision se trouve dans l'émetteur, le récepteur transmettant l'estimation du rapport signal à bruit (la sortie du diviseur 40) à une entrée de commande de l'émetteur.

On considérera tout d'abord le cas pour lequel l'émetteur 10 se trouve dans la station de connexion 18 et le récepteur 12 se trouve dans un terminal $20_i$. Dans ce cas, la mesure du rapport signal à bruit est facilitée par l'émission d'un signal de référence périodique de la station 18 vers les terminaux $20_i$ qui est un signal de synchronisation de niveau déterminé et de période connue. Ainsi, dans ce cas, le récepteur 12 peut exploiter ce signal de synchronisation pour mesurer le rapport signal à bruit, au lieu de faire appel aux signaux utiles qui sont par nature sporadiques.

Dans ce cas, le filtrage 36 du signal utile peut être un simple moyenneur effectuant l'opération suivante :

$$\hat{x}_i = \frac{1}{L} \sum_{j=0}^{L-1} \widetilde{x}_{i-j}$$

où $\widetilde{x}_i$ représente l'estimation instantanée de $E_b$ à l'instant i, $\hat{x}_i$ représente l'estimation lissée de $E_b$ à l'instant i et L est la longueur d'intégration.

Dans cet exemple, le filtre 44 échantillonne, avec une période de 1,5 ms, le signal de bruit $N_0$ sur une période de quelques secondes et retient la valeur maximale observée au cours de cette période.

En variante, sur une période déterminée T, choisie suffisamment longue pour permettre de collecter un nombre suffisant de mesures mais suffisamment courte pour garantir un comportement de bruit stationnaire, on calcule les paramètres liés à la distribution, ou histogramme, des échantillons de bruit pour en déduire un niveau de bruit $\mu_{N0} + \Delta N_0$ tel que la probabilité pour que la valeur instantanée du bruit dépasse ce niveau soit inférieure à $\varepsilon$, c'est-à-dire :

$$P(\forall i \in [O,T], \ \widetilde{N}_0(i) > \mu_{N0} + \Delta N_0) < \varepsilon$$

Dans cette formule, $\tilde{N}_0(i)$ représente la valeur d'un échantillon de bruit de la distribution à l'instant ti, T la période d'observation et $\mu_{N0}$ la valeur moyenne du signal de bruit.

Cette formule est représentée par le diagramme de la figure 3 sur lequel on a porté, en abscisses, les niveaux instantanés de bruit $\tilde{N}_0$ et, en ordonnées, les probabilités p($\tilde{N}_0$) d'apparition de ces niveaux.

La valeur retenue $\mu_{N0} + \Delta N_0$ peut être calculée à l'aide des moments de la distribution, notamment, à partir de la moyenne $\mu$ et de la variance $\sigma^2$. Dans ce dernier cas, la valeur lissée a par exemple pour valeur, $\mu + n\sigma$, $\sigma$ étant un écart type et n, un entier choisi en fonction de la valeur de $\varepsilon$ retenue.

On considère ensuite le cas où l'émetteur 10 se trouve dans un terminal et le récepteur se trouve dans la station de connexion 18. Dans cette hypothèse, le terminal n'émettant pas de signal de référence périodique vers la station de connexion mais des signaux d'information d'une façon sporadique sous forme de cellules ou paquets, on effectue, dans le récepteur, une estimation de la puissance $E_b$ du signal pour chaque paquet ou cellule alors que l'estimation du bruit peut être effectuée suivant une période régulière, comme dans le cas précédent.

Ainsi, dans ce cas, le filtrage 44 du bruit s'effectue de la même manière que dans l'hypothèse précédente. Par contre, pour le lissage ou filtrage 36 du signal, il est préférable de tenir compte du caractère sporadique de la transmission. On fait, par exemple, appel à un filtre auto-régressif du premier ordre permettant d'effectuer l'opération suivante :

$$\hat{x}_i = (1 - a)\tilde{x}_i + a\hat{x}_{i-1}$$

où $\tilde{x}_i$ représente l'estimation instantanée de $E_b$ à l'instant i, $\hat{x}_i$ représente l'estimation lissée de $E_b$ à l'instant i et a est un coefficient d'intégration.

Un tel filtre est en effet mieux adapté au caractère sporadique qu'une moyenne car, comme le montre la formule précédente, il donne plus de poids aux informations les plus récentes qu'aux informations plus anciennes.

Le procédé conforme à l'invention fournit une estimation du rapport signal à bruit du signal reçu qui permet d'appliquer une consigne à l'émetteur. On peut ainsi minimiser la puissance d'émission tout en permettant de respecter un taux d'erreurs binaires qui ne dépasse pas un seuil prescrit.

Le traitement statistique du bruit qui est utilisé est particulièrement utile et efficace dans le cas où le système de télécommunications représenté sur la figure 2, est tel que deux zones voisines 16 utilisent la même fréquence porteuse. En effet, dans ce cas, il existe un risque de brouillage dans des parties voisines ou non des deux zones et, donc, un bruit non prédictible dans ces parties.

**Revendications**

1. Procédé d'estimation du rapport signal à bruit d'un signal utile, notamment de type numérique, reçu par un récepteur de radiocommunications, **caractérisé en ce que**, pour minimiser le bruit d'estimation du rapport signal à bruit, on estime séparément le signal et le bruit et **en ce qu'**on filtre (36, 44) séparément le signal ($E_b$) et le bruit ($N_0$) avant d'effectuer la division (40) du signal par le bruit,
   **en ce que**, pour filtrer le signal utile ($E_b$), on fait appel à un filtre à réponse impulsionnelle finie, et **en ce que** l'émetteur délivrant un signal de référence à période régulière avec un niveau déterminé, l'estimation du rapport signal à bruit est effectuée sur ce signal de référence.

2. Procédé selon la revendication 1, **caractérisé en ce que** le filtrage (36) du signal utile ($E_b$) est différent du filtrage (44) du signal de bruit ($N_0$)

3. Procédé selon la revendication 1 ou 2, **caractérisé en ce que**, pour filtrer le signal de bruit, on observe la distribution statistique des mesures de puissance de bruit pour une période déterminée (T) au cours de laquelle on collecte un nombre statistiquement représentatif d'échantillons de mesures, cette période étant cependant suffisamment courte pour que le bruit reste pratiquement stationnaire.

4. Procédé selon la revendication 3, **caractérisé en ce que** le niveau de bruit retenu a une valeur ($\mu_{N0} + \Delta N_0$) telle que la probabilité (P) que le niveau de bruit dépasse cette valeur soit inférieure à un seuil prédéterminé ($\varepsilon$) pendant la période (T) d'observation.

5. Procédé selon la revendication 3 ou 4, **caractérisé en ce que** la valeur de bruit retenue est la valeur maximale sur la période déterminée (T).

**6.** Procédé selon la revendication 3 ou 4, **caractérisé en ce qu'**on détermine les moments de la distribution.

**7.** Procédé selon la revendication 6, **caractérisé en ce qu'**on détermine la moyenne ($\mu$) et la variance ($\sigma^2$) de la distribution et **en ce que** la valeur de bruit retenue est $\mu + n\sigma$, $\sigma$ étant un écart type et n un nombre déterminé en fonction du seuil prédéterminé.

**8.** Procédé selon la revendication 1 ou 2, **caractérisé en ce que**, pour filtrer le signal de bruit, on fait appel à un filtrage passe-bas du type à réponse impulsionnelle finie ou infinie.

**9.** Procédé selon la revendication 1, **caractérisé en ce que** le filtre à réponse impuisionnelle finie est de type moyenneur.

**10.** Procédé selon l'une quelconque des revendications 1 à 8, **caractérisé en ce que**, pour filtrer l'estimation du signal utile, on utilise un filtre à réponse impulsionnelle infinie.

**11.** Procédé selon la revendication 10, **caractérisé en ce qu'**on utilise un filtrage auto-régressif du premier ordre, par exemple, d'expression :

$$\hat{x}_i = (1-a)\widetilde{x}_i + a\hat{x}_{i-1}$$

où $\widetilde{x}_i$ représente l'estimation instantanée du signal utile à l'instant i, $\hat{x}_i$ représente l'estimation lissée du signal utile à l'instant i et a est un coefficient d'intégration.

**12.** Procédé selon la revendication 10 ou 11, **caractérisé en ce que** le filtrage est appliqué à chaque paquet ou cellule reçu(e), les paquets ou cellules étant reçus de façon sporadique.

**13.** Application du procédé selon l'une quelconque des revendications précédentes à l'estimation du rapport signal à bruit dans un récepteur de télécommunications envoyant une information destinée à contrôler la puissance de l'émetteur correspondant.

**Claims**

**1.** A method for estimating the signal-to-noise ratio of a useful signal, particularly a digital signal, received by a radio communications receiver, **characterized in that**, to minimize the estimated noise of the signal-to-noise ratio, the signal and noise are estimated separately, and **in that** the signal (Eb) and noise (N0) are filtered (36, 44) separately after the signal is divided (40) by the noise,
and **in that**, to filter the useful signal (Eb), a finite impulse response filter is enlisted, and **in that** as the emitter delivers a regular-frequency baseline signal with a determined level, the estimate of the signal-to-noise ratio is carried out on that baseline signal.

**2.** A method according to the claim **characterized in that** the filtering (36) of the useful signal (Eb) is different from the filtering (44) of the noise signal (N0)

**3.** A method according to claim 1 or 2, **characterized in that**, in order to filter the noise signal, the statistical distribution of the noise power measures for a determined period (T) during which a statistically representative number of measurement samples are collected, though this period is short enough for the noise to remain practically stationary.

**4.** A method according to claim 3, **characterized in that** the retained noise level has a value ($\mu$N0 + $\Delta$N0) such that the probability (P) that the noise level exceeds that value is less than a predetermined threshold ($\varepsilon$) during the observation period (T).

**5.** A method according to claim 3 or 4, **characterized in that** the retained noise value is the maximum value over the determined period (T)

**6.** A method according to claim 3 or 4, **characterized in that** the distribution moments are determined.

**7.** A method according to claim 6, **characterized in that** the mean ($\mu$) and variance ($\sigma^2$) of the distribution are determined, and **in that** the retained noise value is $\mu + n\sigma$, $\sigma$ being a standard deviation, and n a number determined as a function of the predetermined threshold.

**8.** A method according to claim 1 or 2, **characterized in that** a finite or infinite impulse response low-pass filter is enlisted to filter the signal-to-noise ratio.

**9.** A method according to claim 1, **characterized in that** the finite impulse response filter is an averager.

**10.** A method according to any one of the claims 1 to 8, **characterized in that** an infinite impulse response filter is used to filter the estimation of the useful signal.

**11.** A method according to claim 10, **characterized in that** a first-order recursive filter is used, with, for example, the expression:

$$\hat{x}_i = (1-a)\tilde{x}_i + a\hat{x}_{i-1}$$

Where $\tilde{x}_i$ represents the instant estimate of the useful signal at the moment i, $\hat{x}_i$ represents the smoothed estimate of the useful signal at the moment i, and a is an integration coefficient.

**12.** A method according to claim 10 or 11, **characterized in that** the filtering is applied to each received packet or cell, the packets or cells being received sporadically.

**13.** An application of the method according to any one of the preceding claims to the estimating of the signal-to-noise ratio within a telecommunications receiver sending a piece of information intended to control the corresponding emitter's power.

**Patentansprüche**

**1.** Verfahren zur Schätzung des Signal-Rausch-Abstands eines an einem Funkkommunikationsempfänger empfangenen Nutzsignals, insbesondere vom Typ digital, **dadurch gekennzeichnet, dass** man, um den geschätzten Rauschpegel des Signal-Rausch-Abstands zu minimieren, das Signal und das Rauschen getrennt schätzt, und dass man, bevor die Division (40) des Signals durch das Rauschen vorgenommen wird, das Signal ($E_b$) und das Rauschen ($N_0$) getrennt filtert (36,44),
dass man, um das Nutzsignal ($E_b$) zu filtern, einen Filter mit endlicher Impulsantwort verwendet, und dass der Sender ein Referenzsignal mit gleichförmiger Periode mit einem vorgegebenen Pegel ausgibt, wobei die Schätzung des Signal-Rausch-Abstands auf dem besagten Referenzsignal vorgenommen wird.

**2.** Verfahren nach Anspruch 1, **dadurch gekennzeichnet, dass** sich die Filterung (36) des Nutzsignals ($E_b$) von der Filterung (44) des Rauschsignals ($N_0$) unterscheidet.

**3.** Verfahren nach Anspruch 1 oder 2, **dadurch gekennzeichnet, dass** man zum Filtern des Rauschsignals die statistische Verteilung der Rauschleistungsmessungen während eines gegebenen Zeitraums (T), während welchem man eine statistisch repräsentative Anzahl von Messproben erfasst, beobachtet, wobei dieser Zeitraum jedoch kurz genug ist, so dass das Rauschen praktisch stationär bleibt.

**4.** Verfahren nach Anspruch 3, **dadurch gekennzeichnet, dass** der berücksichtigte Rauschpegel einen Wert ($\mu_{N0} + \Delta N_0$) aufweist, so dass die Wahrscheinlichkeit (P), dass der Rauschpegel diesen Wert überschreitet, während der Beobachtungsperiode (T) niedriger als ein vorbestimmter Grenzwert ($\varepsilon$) ist.

**5.** Verfahren nach Anspruch 3 oder 4, **dadurch gekennzeichnet, dass** der berücksichtigte Rauschpegelwert der Höchstwert während des vorgegebenen Zeitraums (T) ist.

**6.** Verfahren nach Anspruch 3 oder 4, **dadurch gekennzeichnet, dass** man die Zeitpunkte der Verteilung bestimmt.

**7.** Verfahren nach Anspruch 6, **dadurch gekennzeichnet, dass** man den Mittelwert ($\mu$) und die Varianz ($\sigma^2$) der Verteilung ermittelt, und dass der berücksichtige Rauschpegelwert $\mu + n\sigma$ ist, wobei $\sigma$ eine Standardabweichung und n eine gemäß dem vorbestimmten Grenzwert bestimmte Zahl ist.

**8.** Verfahren nach Anspruch 1 oder 2, **dadurch gekennzeichnet, dass** man für die Filterung des Rauschsignals eine Tiefpassfilterung vom Typ mit endlicher oder unendlicher Impulsantwort anwendet.

**9.** Verfahren nach Anspruch 1, **dadurch gekennzeichnet, dass** der Filter mit endlicher Impulsantwort vom Typ Mittelwertbildner ist.

**10.** Verfahren nach einem beliebigen der Ansprüche 1 bis 8, **dadurch gekennzeichnet, dass** man zum Filtern der Schätzung des Nutzsignals einen Filter mit unendlicher Impulsantwort verwendet.

**11.** Verfahren nach Anspruch 10, **dadurch gekennzeichnet, dass** man eine autoregressive Filterung erster Ordnung anwendet, beispielsweise wie folgt formuliert:

$$\hat{x}_i = (1 - a)\tilde{x}_i + a\hat{x}_{i-1}$$

wobei $\tilde{x}_i$ die momentane Schätzung des Nutzsignals zum Zeitpunkt i darstellt, $\tilde{x}_i$ die geglättete Schätzung des Nutzsignals zum Zeitpunkt i darstellt und a ein Integralkoeffizient ist.

**12.** Verfahren nach Anspruch 10 oder 11, **dadurch gekennzeichnet, dass** die Filterung auf jedes empfangene Paket oder jede empfangene Zelle angewendet wird, wobei die Pakete oder Zellen sporadisch empfangen werden.

**13.** Anwendung des Verfahrens nach einem beliebigen der vorstehenden Ansprüche für die Schätzung des Signal-Rausch-Abstands in einem Funkkommunikationsempfänger, welcher eine Information, die zur Steuerung der Leistung des entsprechenden Senders bestimmt ist, sendet.

FIG.1

FIG.2

FIG.3